# EUROPEAN PATENT SPECIFICATION

(11) **EP 2 293 644 B1**
(45) Date of publication and mention of the grant of the patent: **22.04.2015**
(21) Application number: 09802348.4
(22) Date of filing: 24.07.2009
(51) Int. Cl.: H04W 88/02, H04L 12/70

(54) **METHOD FOR ADAPTIVELY ADJUSTING RECEIVING RATE BUFFERING AND PLAYING OF MOBILE MULTIMEDIA BROADCAST TERMINAL**
VERFAHREN ZUR ADAPTIVEN ANPASSUNG DER EMPFANGSPUFFERRATE UND APSPIELEN EINES MOBILEN MULTIMEDIASENDETERMINALS
PROCÉDÉ D'AJUSTEMENT ADAPTATIF DU TAUX DE RÉCEPTION, DE MISE EN TAMPON ET DE DIFFUSION D'UN TERMINAL MOBILE DE DIFFUSION MULTIMÉDIA

(30) Priority: 31.07.2008 CN 200810145069
(43) Date of publication of application: 09.03.2011
(73) Proprietor: ZTE Corporation, Shenzhen, Guangdong 518057 (CN)
(72) Inventor: JIN, Chongting, Shenzhen Guangdong 518057 (CN); LIU, Zhengrong, Shenzhen Guangdong 518057 (CN); JIANG, Xiangdong, Shenzhen Guangdong 518057 (CN)
(74) Representative: Manitz, Finsterwald & Partner GbR
(86) International application number: PCT/CN2009/000830
(87) International publication number: WO 2010/012155

(56) References cited:
- EP-A2- 1 182 875
- WO-A2-00/41400
- CN-A- 1 599 453
- CN-A- 1 655 547
- CN-A- 101 207 783
- CN-A- 101 330 340
- US-A- 5 617 145
- US-A1- 2006 077 994
- US-A1- 2007 133 405

## Description

### Technical Field

The present invention relates to mobile multimedia broadcast technique, and in particular, to a method for a mobile multimedia broadcast terminal to self-adaptively adjust receiving rate to buffer playing.

### Background of the Invention

With continuous development of mobile communication and digital TV service, mobile TV service is considered as one of the "killer" applications in the times of the 3^{rd} generation of mobile communication (3G), and thus attracts much attention in the related field. Mobile TV service may become a confluent service cooperatively provided by mobile communication industry and broadcast TV industry. Mobile operators can utilize network capability and subscriber's management capability to the greatest extent to provide more diverse services; the broadcast firms can make full use of content resources, expand the scope of subscribers and achieve mobilization of broadcast network. At present, there are almost 400 million mobile phone users in China and nearly 350 million families have televisions. With such a large group of mobile users and broadcast TV users, both network operators and device manufacturers pay much attention on mobile phone service, and hope that it can become a new increase point in the mobile multimedia service.

When audio/video data are transmitted in a wireless environment in which interference, bit error and packet loss occur frequently, problems on network service such as instability and unreliability will affect normal use and capacity expansion of a subscriber. As for an existing mobile TV based on broadcast TV network technique, the problem that signals received by a mobile phone TV receiving terminal are not stable is inevitable and will still exist in a long period of time before optimization of the network, due to factors such as incomplete coverage of a network established in the early stage, unstable signals and bad weather.

Additionally, the existing mobile multimedia broadcast receiving terminal receives broadcast TV signals in real time, and playing of programs is easily interrupted once the network is not stable, for example, over three times of ill signal reception with duration of about 4 seconds occur per minute on average, or downlink received signal strength indicator (RSSI) is lower than a signal threshold. Moreover, when switching channels, a subscriber has to firstly disconnect the previous channel before connecting and receiving the new channel, and since the program in the previous channel cannot be played during this period, the subscriber has to wait for a long time.

To sum up, the QoS of the mobile multimedia broadcast network in the prior art is very low, and the defects such as discontinuity of playing of programs greatly affect the watching and feeling effects for a mobile multimedia subscriber, and thus is an important technical problem that is urgently to be solved.

Related technologies are known from EP 1 182 875 A2 and US 2006/077994 A1.

### Summary of the Invention

The technical problem to be solved in the present invention is to provide a method for a mobile multimedia broadcast terminal to self-adaptively adjust receiving rate to buffer playing to improve the QoS of the mobile multimedia broadcast network, as defined in the independent claim.

In order to solve the above technical problem, it is provided a method for a mobile multimedia broadcast terminal to self-adaptively adjust receiving rate to buffer playing, comprising the following steps of:
periodically detecting network status;
calculating a receiving rate factor indicating a grade of bit rate for receiving audio-video data according to the network status;
setting up a buffering queue;
de-multiplexing received broadcast modulated data to obtain the audio-video data;
selectively decoding the audio-video data according to the receiving rate factor and storing the data into the buffering queue; and
playing the decoded audio-video data in the buffering queue.

In the method described as above, said step of calculating a receiving rate factor according to the network status may comprises: the terminal calculating the receiving rate factor according to a received signal strength indicator, a weak signal off-line threshold and a weak signal standby threshold, wherein the terminal is in off-line state when the received signal strength indicator is lower than the weak signal off-line threshold and in standby state when the received signal strength indicator reaches the weak signal off-line threshold.

The method as described above, may further comprise:
dynamically adjusting capacity of the buffering queue according to the receiving rate factor after setting up the buffering queue.

In the method described as above, said step of selectively decoding the audio-video data according to the receiving rate factor and storing the data into the buffering queue may comprises gradationally decoding the audio-video data according to the receiving rate factor and storing the data into the buffering queue.

Furthermore, said step of gradationally decoding the audio-video data may comprise decoding key frames intra-frame compressed in video data, and partially or totally discarding redundant slice data.

In the method as described above, said step of playing the decoded audio-video data in the buffering queue may comprises reading out the audio-video data in the buffering queue and playing in a First In First Out mode.

In the method as described above, when the receiving rate factor changes, playing synchronization can be achieved by performing data frame reconstruction on the buffering queue.

It is also provided a method for a mobile multimedia broadcast terminal to switch channels, comprising: when switching channels, the terminal may disconnect a current channel, carrying out the method for a mobile multimedia broadcast terminal to self-adaptively adjust receiving rate to buffer playing previously described, and playing the decoded audio-video data of the current channel in the buffering queue, and after successfully connecting a target channel, carrying out the method for a mobile multimedia broadcast terminal to self-adaptively adjust receiving rate to buffer playing previously described and playing decoded audio-video data of the target channel.

Furthermore, in the method for switching channel:
the terminal receiving a channel switching signaling;
when the terminal disconnects a current channel, playing decoded audio-video data of the current channel stored in the buffering queue, and connecting the target channel;
after successfully connecting the target channel, stop playing decoded audio-video data of the current channel, but playing decoded audio-video data of the target channel.

### Brief Description of Drawings

FIG. 1 illustrates steps of the method according to the present invention;
FIG. 2 illustrates steps of an embodiment of the method according to the present invention taking a CMMB terminal as an example;
FIG. 3 illustrates steps of self-adaptively adjusting receiving rate factor according to the network status according to the present invention;
FIG. 4 illustrates steps for channel switching.

### Preferred Embodiments of the Invention

The embodiments of the present invention will be described below in detail with reference to accompanying drawings and examples so that the implementing process as to how the present invention uses the technical means to solve the technical problem and achieve the technical effect can be better understood and can be thereby carried out.

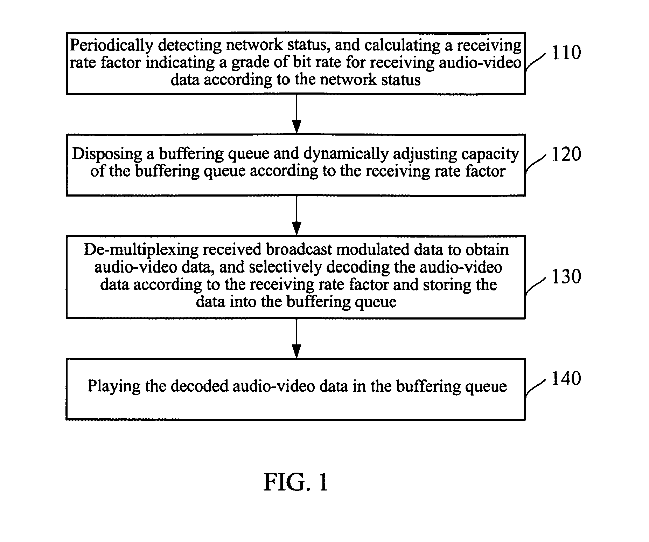

FIG. 1 illustrates steps of the method according to the present invention, which comprises the following steps of:
Step 110, periodically detecting network status, and calculating a receiving rate factor Sₙ indicating a grade of bit rate for receiving audio-video data according to the network status;
Step 120, setting up a buffering queue FIFO and dynamically adjusting capacity of the buffering queue according to the receiving rate factor Sₙ;
Step 130, de-multiplexing received broadcast modulated data to obtain audio-video data, and selectively decoding the audio-video data according to the receiving rate factor Sₙ and storing the data into the buffering queue FIFO; and
Step 140, playing the decoded audio-video data in the buffering queue FIFO.

The receiving rate factor Sₙ used in the above steps reflects the network conditions, indicates the grade of bit rate for receiving audio-video (AV) data and meanwhile reflects a general duration time that the data buffered in the buffer area can be played. The value range of Sₙ is [0-Sₘₐₓ], Sₙ=0 means the network signal is very good, and the AV data do not need to be deleted, i.e., buffering is not required; the larger the Sₙ is, the worse the network status is, the more AV data are deleted and the longer the buffer delay is, meanwhile the stronger the anti-discontinuity ability is. Sₙ=Sₘₐₓ means the network signal is the worst, the most of AV data is deleted and the buffer delay is the longest. Calculation of Sₙ depends on signal strength or other factors that affect continuity of video playing.

The method of self-adaptively adjusting rate is mainly to partially decode the de-multiplexed multimedia audio-video data according to the priority of the data frames based on the receiving rate factor Sₙ to achieve lower decoding complexity, lower spatial resolution and lower time resolution (i.e., frame frequency). For example, only key frame I or combined frame P intra-frame compressed in the video data is decoded, and B frame and other redundant slice data are partially or totally discarded. When 0<Sₙ<=Sₘₐₓ, audio-video data with different bit rates can be obtained through partial decoding and different ways of decoding, and are divided into Sₙ grades.

A FIFO buffering queue is used to store multimedia data frames extracted from de-multiplexed TV data. When the rate factor Sₙ varies, the bit rate for extracting multimedia data also varies, therefore, a FIFO buffering area with a fixed size can contain different amounts of data frames to thereby change buffering time. During playing at the terminal, the data in the buffering queue are read out in a First In First Out (FIFO) mode to perform decoding and playing. When the rate factor Sₙ changes, playing synchronization needs to be indicated since the buffering time is adjusted, and data frame reconstruction of FIFO queue can achieve this purpose.

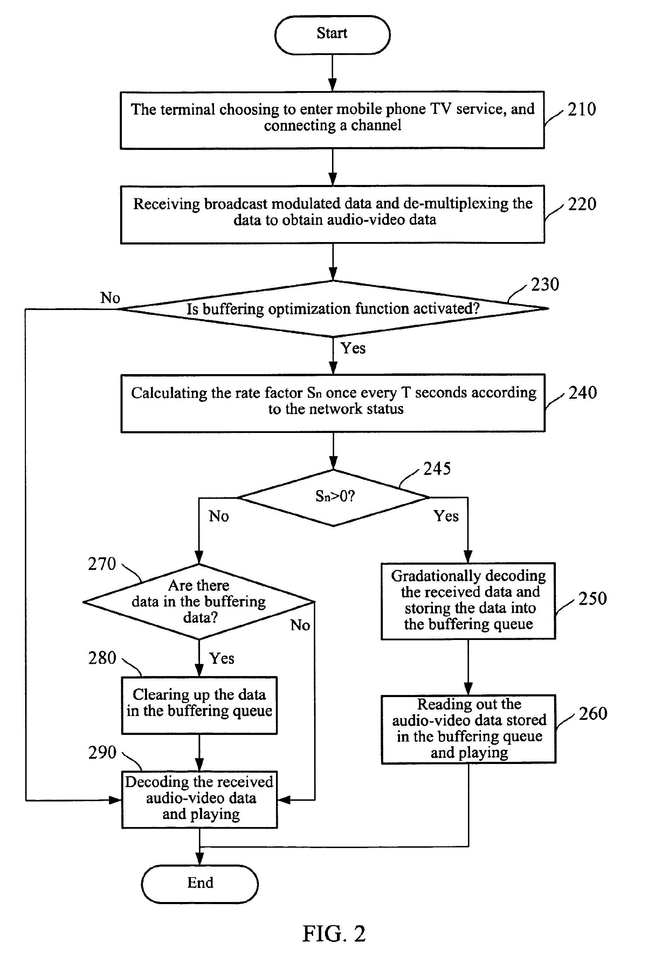

The method of the present invention will be described taking a China Mobile Multimedia Broadcast (CMMB) mobile phone TV terminal as an example. A CMMB terminal can work in GSM/GPRS mobile communication network, CMMB broadcast TV mode of CMMB Ultra High Frequency (UHF) wave band (470-862MHz) and S wave band (2635-2660MHz). FIG. 2 illustrates a method for a CMMB terminal to self-adaptively adjust receiving rate to implement buffered playing according to the network status, wherein when the terminal is powered on and enters mobile phone TV mode, the user can configure whether to activate network intermittently optimization (self-adaptive rate adjustment) function. If the user activates this function, then the terminal starts to collect records to figure out required network data, adjust rate factor and selectively buffer de-multiplexed data, decoding and playing, etc., and the steps are as follows:
Step 210, after the terminal is powered on, choosing to enter mobile phone TV service, and connecting a program channel;
Step 220, the terminal receiving broadcast modulated data and de-multiplexing the received broadcast modulated data to obtain audio-video data;
Step 230, determining whether buffering optimization function is activated, proceeding to step 240 if it is activated; turning to step 290 if not;
Step 240, calculating the rate factor Sₙ once every T seconds according to the network status;
Step 245, determining whether the rate factor Sₙ is greater than 0, proceeding to step 250 if it is, otherwise (Sₙ=0) turning to step 270;
Step 250, gradationally decoding the received data and storing the data into the buffering queue FIFO, proceeding to step 260;
Step 260, reading out the audio-video data stored in the buffering queue FIFO and playing, ending.
Step 270, Sₙ=0 indicating that the network status is very good, determining whether there are data stored in the buffering queue FIFO, proceeding to step 280 if there are, otherwise turning to step 290;
Step 280, clearing up the data in the buffering queue, and the data therein are not used anymore in the subsequent playing, rather, the received de-multiplexed data are directly used, then turning to step 290; and
Step 290, directly decoding the audio-video data just received and playing, ending.

Additionally, in step 240, if the calculated Sₙ changes, then the buffering queue FIFO is repartitioned, otherwise the partition of buffering area does not change.

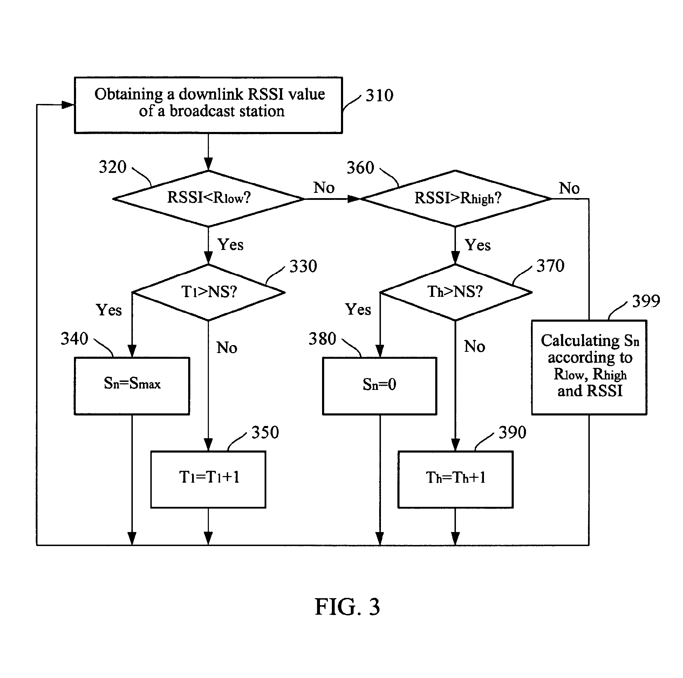

Please refer to FIG. 3 for the adjusting process of self-adaptively adjusting receiving rate factor Sₙ according to the network status. RSSI is taken as an example below:
Step 310, acquiring a downlink RSSI value of the broadcast station (the initial value of Sₙ is 0, and buffering is not needed);
Step 320, determining whether RSSI is lower than a weak signal off-line threshold R_{low}, proceeding to step 330 if it is, otherwise turning to step 360, wherein the weak signal off-line threshold R_{low} means that the terminal will be off-line if RSSI is lower than the R_{low};
Step 330, further determining whether the successively accumulative times T₁ when RSSI is lower than R_{low} is greater than a stability coefficient NS, turning to step 340 if it is, otherwise turning to step 350;
Step 340, Sₙ=Sₘₐₓ, returning to step 310 to continue the execution;
Step 350, performing automatic increment operation on the successively accumulative times T₁, returning to step 310 to continue the execution;
Step 360, determining whether RSSI is greater than a weak signal standby threshold R_{high}, proceeding to step 270 if it is, otherwise turning to step 399, wherein the weak signal standby threshold R_{high} means that the terminal is in standby state when RSSI reaches R_{high};
Step 370, further determining whether the successively accumulative times Tₕ when RSSI is greater than R_{high} is greater than a stability coefficient NS, proceeding to step 380 if it is, otherwise turning to step 390;
Step 380, Sₙ=0, returning to step 310 to continue the execution;
Step 390, performing automatic increment operation on the successively accumulative times Tₕ, returning to step 310 to continue the execution; and
Step 399, RSSI is between [R_{low}, R_{high}] at this moment, calculating Sₙ according to R_{low}, R_{high} and RSSI, wherein one of the algorithms is [(R_{high} - R_{low})/( RSSI-R_{low})], and then rounding the result.

If Sₙ is calculated once every T seconds, then the Sₙ value does not need to be adjusted if the network remains stable during a period of T*NS seconds, otherwise the receiving rate needs to be readjusted.

In a specific embodiments of the present invention, Sₘₐₓ is generally less than 5 seconds so as to ensure that delay of a TV program is within the tolerable range of the subscriber and meanwhile the volume of the buffered data does not go beyond the buffering space which the terminal is able to provide. T may be 180 seconds, 300 seconds and 600 seconds, and NS is 3, then Sₙ remains stable within 540 seconds, 900 seconds and 1800 seconds correspondingly.

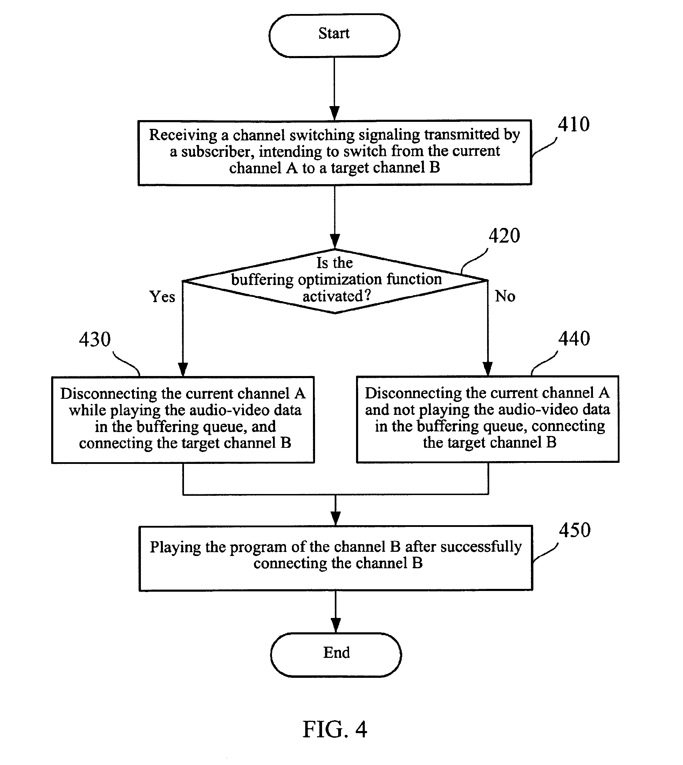

When the present invention is applied to a process of switching channels, the terminal can play the audio-video data of the current channel stored in the buffering queue as it switches channels during the time period after the current channel is disconnected and before the new channel is connected, so that the broadcast program of the current channel can still be played during the switching process and the broadcast program of the new channel can be turned to play after switching to the new channel, thus achieving the effect of reducing the time that the subscriber has to wait for switching channels. FIG. 4 illustrates an example of switching channels, which comprises the following steps:
Step 410, when playing the current channel A, the terminal receiving a channel switching signaling transmitted by a subscriber, intending to switch from the current channel A to a target channel B;
Step 420, determining whether the buffering optimization function is activated or not, proceeding to step 430 if it is activated, turning to step 440 if it is not;
Step 430, disconnecting the current channel A while playing the audio-video data of the current channel A stored in the buffering queue, and connecting the target channel B, then turning to step 450;
Step 440, disconnecting the current channel A and not playing the audio-video data in the buffering queue, connecting the target channel B, then proceeding to step 450; and
Step 450, playing the program of the target channel B after successfully connecting the target channel B.

During the process of switching channels, although the previous channel has been disconnected, the terminal can continues to play the buffered data of the previous channel rather than stop playing immediately. Therefore, when applied to channel switching, the present invention can smooth switch, reduce the waiting time for the subscriber and greatly improve the experiencing effect of a mobile phone TV user.

With the technique of the present invention, when a mobile multimedia broadcast receiving terminal is in a unstable network environment, the terminal side can dynamically adjust the receiving rate according to the network status, store the data into a buffering queue, and play the buffered data in the buffering queue when the signal is temporarily intermitted or the channel is switched, thereby avoiding playing intermittence caused by unstable network signals or channel switching, solving problems such as signal intermittence, transmission delay, delay jitter, packet loss, etc, improving QoS, and providing for the user with fluent audio-video playing effect, smooth and seamless channel switching and high-quality using experience of a mobile multimedia terminal user, meanwhile the existing network does not need to be reconstructed, which saves costs of the device.

Although the embodiments of the present invention are as above, the contents are only embodiments of the present invention adopted for the purpose of better understanding of the present invention and thus are not intended to limit the present invention. Any person having ordinary skill in the art can make modifications and variations on the forms and details for carrying out the present invention without departing from the scope of the present invention as defined by the appended claims.

### Industrial Applicability

Compared with the prior art, in the method according to the present invention, the mobile multimedia broadcast terminal automatically adjusts receiving rate according to the network status and sets up a buffering queue for storing buffered data, thereby making it able to play buffered data in the buffering queue in some cases such as temporary discontinuity of signals.

## Claims

1. A method for a mobile multimedia broadcast terminal to self-adaptively adjust receiving rate to buffer playing, comprising the following steps of:
periodically detecting (110) network status;
calculating (110) a receiving rate factor indicating a grade of bit rate for receiving audio-video data according to the network status;
setting up (120) a buffering queue;
de-multiplexing (130) received broadcast modulated data to obtain the audio-video data;
partially decoding (130) the audio-video data according to a priority of the data based on the receiving rate factor and storing (130) the data into the buffering queue; and
playing (140) the decoded audio-video data in the buffering queue.

2. The method according to claim 1, wherein
said step of calculating a receiving rate factor according to the network status comprises:
the terminal calculating the receiving rate factor according to a received signal strength indicator, a weak signal offline threshold and a weak signal standby threshold, wherein the terminal is in off-line state when the received signal strength indicator is lower than the weak signal off-line threshold and in standby state when the received signal strength indicator reaches the weak signal off-line threshold.

3. The method according to claim 1, further comprising:
dynamically adjusting (120) capacity of the buffering queue according to the receiving rate factor after setting up the buffering queue.

4. The method according to claim 1, wherein
said step of selectively decoding the audio-video data according to the receiving rate factor and storing the data into the buffering queue comprises gradationally decoding the audio-video data according to the receiving rate factor and storing the data into the buffering queue,
wherein said step of gradationally decoding (130) the audio-video data comprises decoding key frames intra-frame compressed in video data, and partially or totally discarding redundant slice data.

5. The method according to claim 1, wherein
said step of playing (140) the decoded audio-video data in the buffering queue comprises reading out the audio-video data in the buffering queue and playing in a First In First Out mode.

6. The method according to claim 1, wherein
when the receiving rate factor changes, playing synchronization is achieved by performing data frame reconstruction on the buffering queue.

## Patentansprüche

1. Verfahren für ein mobiles Multimediarundsendeendgerät, um eine Empfangsrate selbstadaptiv anzupassen, um ein Abspielen zu puffern, das die folgenden Schritte umfasst:
periodisches Detektieren (110) eines Netzstatus;
Berechnen (110) eines Empfangsratenfaktors, der eine Bitratenstufe angibt, zum Empfangen von Audio-Video-Daten gemäß dem Netzstatus;
Einrichten (120) einer Pufferungswarteschlange;
Demultiplexen (130) von empfangenen rundgesendeten modulierten Daten, um die Audio-Video-Daten zu erhalten;
teilweises Decodieren (130) der Audio-Video-Daten gemäß einer Priorität der Daten auf der Grundlage des Empfangsratenfaktors und Speichern (130) der Daten in die Pufferungswarteschlange; und
Abspielen (140) der decodierten Audio-Video-Daten in der Pufferungswarteschlange.

2. Verfahren nach Anspruch 1, wobei
der Schritt des Berechnens eines Empfangsratenfaktors gemäß dem Netzstatus umfasst, dass:
das Endgerät den Empfangsratenfaktor gemäß einem Indikator einer Stärke eines empfangenen Signals, einem Offline-Schwellenwert eines schwachen Signals und einem Standby-Schwellenwert eines schwachen Signals berechnet, wobei sich das Endgerät im Offline-Zustand, wenn der Indikator einer Stärke eines empfangenen Signals niedriger ist als der Offline-Schwellenwert eines schwachen Signals, und im Standby-Zustand befindet, wenn der Indikator einer Stärke eines empfangenen Signals den Offline-Schwellenwert eines schwachen Signals erreicht.

3. Verfahren nach Anspruch 1, das ferner umfasst, dass:
die Kapazität der Pufferungswarteschlange gemäß dem Empfangsratenfaktor nach dem Einrichten der Pufferungswarteschlange dynamisch angepasst wird (120).

4. Verfahren nach Anspruch 1, wobei
der Schritt des selektiven Decodierens der Audio-Video-Daten gemäß dem Empfangsratenfaktor und des Speicherns der Daten in die Pufferungswarteschlange umfasst, dass die Audio-Video-Daten gemäß dem Empfangsratenfaktor stufenweise decodiert werden und die Daten in die Pufferungswarteschlange gespeichert werden,
wobei der Schritt des stufenweisen Decodierens (130) der Audio-Video-Daten umfasst, dass in Videodaten intra-Frame-komprimierte Schlüssel-Frames decodiert werden und redundante Slice-Daten teilweise oder vollständig verworfen werden.

5. Verfahren nach Anspruch 1, wobei
der Schritt des Abspielens (140) der decodierten Audio-Video-Daten in der Pufferungswarteschlange umfasst, dass die Audio-Video-Daten in der Pufferungswarteschlange ausgelesen werden und in einem First-In-First-Out-Modus abgespielt werden.

6. Verfahren nach Anspruch 1, wobei
wenn sich der Empfangsratenfaktor ändert, eine Abspielsynchronisation durch Durchführen einer Daten-Frame-Rekonstruktion an der Pufferungswarteschlange erreicht wird.

## Revendications

1. Procédé pour un terminal de radiodiffusion multimédia mobile afin d'ajuster de manière auto-adaptative la cadence de réception à une lecture en tampon, comprenant les étapes suivantes consistant à :
détecter périodiquement (110) l'état du réseau ;
calculer (110) un facteur de cadence de réception indiquant un degré d'une cadence de bits pour recevoir des données audio/vidéo en accord avec l'état du réseau ;
établir (120) une queue tampon ;
démultiplexer (130) les données modulées de radiodiffusion reçues pour obtenir les données audio/vidéo ;
partiellement décoder (130) les données audio/vidéo en accord avec une priorité des données sur la base du facteur de cadence de réception et stocker (130) les données dans la queue tampon ; et
lire (140) les données audio/vidéo décodées dans la queue tampon.

2. Procédé selon la revendication 1, dans lequel
ladite étape consistant à calculer un facteur de cadence de réception en accord avec l'état du réseau comprend les étapes suivantes :
le terminal calcule le facteur de cadence de réception en accord avec un indicateur d'intensité du signal reçu, un seuil "hors ligne" [off-line] de signal faible et un seuil "d'attente" [standby] de signal faible, dans lequel le terminal est à l'état off-line quand l'indicateur d'intensité du signal reçu est plus faible que le seuil off-line de signal faible et dans l'état de standby quand l'indicateur d'intensité du signal reçu atteint le seuil off-line de signal faible.

3. Procédé selon la revendication 1, comprenant en outre :
l'étape consistant à ajuster (120) de manière dynamique la capacité de la queue tampon en accord avec le facteur de cadence de réception après avoir établi la queue tampon.

4. Procédé selon la revendication 1, dans lequel
ladite étape consistant à décoder sélectivement les données audio/vidéo en accord avec le facteur de cadence de réception et consistant à stocker des données dans la queue tampon comprend de décoder les données audio/vidéo avec une gradation en accord avec le facteur de cadence de réception, et de stocker des données dans la queue tampon,
dans lequel ladite étape consistant à décoder (130) les données audio/vidéo avec gradation comprend de décoder des trames clé comprimées en données vidéo internes à la trame, et de rejeter partiellement ou totalement des données de tranches redondantes.

5. Procédé selon la revendication 1, dans lequel
ladite étape consistant à lire (140) les données audio/vidéo décodées dans la queue tampon comprend de lire les données audio/vidéo dans la queue tampon et à les restituer dans un mode "premier entré/premier sorti" [First In First Out].

6. Procédé selon la revendication 1, dans lequel
quand le facteur de cadence de réception change, la synchronisation de restitution est obtenue en exécutant une construction des trames de données sur la queue tampon.
